(19) Europäisches Patentamt
European Patent Office
Office européen des brevets

(11) Veröffentlichungsnummer : **0 398 060 B1**

(12) # EUROPÄISCHE PATENTSCHRIFT

(45) Veröffentlichungstag der Patentschrift :
**26.05.93 Patentblatt 93/21**

(21) Anmeldenummer : **90108155.4**

(22) Anmeldetag : **28.04.90**

(51) Int. Cl.$^5$ : **C09J 175/04,** C09J 169/00, C08L 75/04, C08L 69/00, C08G 18/10, // (C09J175/04, 169:00, 167:04), (C09J169/00, 175:04, 167:04), (C08L75/04, 69:00, 67:04), (C08L69/00, 75:04, 67:04)

(54) **Verwendung von Polyurethan-Mischungen als Klebstoffbindemittel zur Verklebung von SBS-Blockpolymerisaten.**

(30) Priorität : **11.05.89 DE 3915424**

(43) Veröffentlichungstag der Anmeldung :
**22.11.90 Patentblatt 90/47**

(45) Bekanntmachung des Hinweises auf die Patenterteilung :
**26.05.93 Patentblatt 93/21**

(84) Benannte Vertragsstaaten :
**AT CH DE ES FR GB IT LI**

(56) Entgegenhaltungen :
**EP-A- 0 335 182**
**GB-A- 1 416 144**
**US-A- 3 431 224**

(73) Patentinhaber : **BAYER AG**
**W-5090 Leverkusen 1 Bayerwerk (DE)**

(72) Erfinder : **Beck, Manfred, Dr.**
**Weberstrasse 11a**
**W-5272 Wipperfürth (DE)**
Erfinder : **Müller-Albrecht, Horst, Dr.**
**Roggendorfstrasse 59**
**W-5000 Köln 80 (DE)**
Erfinder : **Königshofen, Heinrich, Dr.**
**Am Mühlenberg 26**
**W-5060 Bergisch-Gladbach (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Jouve, 18, rue Saint-Denis, 75001 PARIS

## Beschreibung

Die Erfindung betrifft die Verwendung von Polyurethan-Mischungen als Klebstoffbindemittel zur Verklebung von SBS-Blockpolymerisaten.

Die Verklebung von Sohlen auf Basis von SBS-Blockpolymerisat-Compounds mit Polyurethan (PU)-Klebstoffen liefert ohne spezielle Vorbehandlung der Sohlen oft nicht die gewünschte Haftfestigkeit. Daher hat man sich in der Vergangenheit vielfach um Maßnahmen zur Verbesserung der Haftfestigkeit bemüht:

In der GB-PS 1 293 842 wird vorgeschlagen, die zu verklebenden Teile mit N-Halogenverbindungen (wie Isocyanurchlorid, 1.3-Dichlor-5.5-dimethylhydantoin, N-Chlorsuccinimid u.ä. vorzubehandeln oder dem Klebstoff diese N-Halogenverbindungen zuzusetzen. Im ersten Fall handelt es sich um die Verwendung eines Primers und damit um einen unerwünschten Arbeitsschritt. Im zweiten Fall muß man entweder die N-Halogenverbindungen enthaltenden Klebstoffe als Lösungen aufbewahren (was auf der Stufe der Bindemittel-Produktion nicht gewünscht wird) oder man darf aus Gründen mangelnder Stabilität die N-Halogenverbindungen erst kurz vor dem Gebrauch der Klebstoffe zusetzen (was wegen der Halogenabspaltung der N-Halogenverbindungen vom Verarbeiter gerne vermieden werden würde).

Gemäß der GB-PS 1 500 296 soll man als Primer-Mischungen aus Isocyanurchlorid und einem Sulfonamid, wie z.B. p-Toluolsulfonamid, einsetzen. Nach der GB-PS 2 048 897 soll man das Reaktionsprodukt aus Styrol/Butadien/Styrol (SBS)-Blockpolymerisat und N-Halogenverbindung als Primer verwenden. Aus der DE-OS 2 454 553 ist bekannt, Lösungen hydroxychlorierter SBS-Blockpolymerisate als Primer oder Abmischungen solcher Lösungen mit PU-Klebstoffen zur Verklebung von Gummisohlen zu verwenden.

Sofern es sich um die Verwendung von Primern handelt, möchte man den zusätzlichen Arbeitsschritt gerne vermeiden; die hydroxychlorierten SBS-Blockpolymerisate der DE-OS 2 454 553 haben sich nach dem Abtrennen aus organischer Lösung als unlöslich erwiesen und können dann nicht wieder ohne weiteres in Lösungsmitteln gelöst werden.

Aus der US-Patentschrift 3,431,224 sind Polycarbonat-Mischungen bekannt, die eine vermindernde Spannungsrißkorrosion aufweisen, wenn spezielle Modifikatoren, wie Polycarbonate, in der Mischung enthalten sind. Ein hinweis auf die Verwendung bei der Verklebung von SBS-Blockpolymerisaten ohne Primer ist aus dieser Patentschrift nicht herauszulesen.

Es bestand daher ein Bedarf nach einem Klebstoff, der ohne Verwendung eines Primers zum Verkleben von Sohlen, insbesondere von solchen aus thermoplastischem Kautschuk auf Basis von SBS-Blockpolymerisat-Compounds geeignet ist.

Gegenstand der vorliegenden Erfindung ist die Verwendung der Mischungen aus

A) 85 - 99,5 Gew.-Teilen Hydroxylpolyurethan und

B) 15 - 0,5 Gew.-Teilen aromatischem Polycarbonat mit einem mittleren Molekulargewicht $M_w$ von 10.000 - 200.000, dessen eingebaute Diphenoleinheiten zu mindestens 50 Mol-% aus o.o.o'.o'-Tetramethylbisphenol-Einheiten bestehen, als Klebstoffbindemittel zur Verklebung von SBS-Blockpolymerisaten.

Die oben beanspruchten Mischungen besitzen eine ausreichende Kontaktklebezeit von ungefähr 1 Minute nach der Hitzeschockaktivierung und liefern ohne Anwendung von Primern Verklebungen von SBS (z.B. als Sohlenmaterial) mit guter Anfangs- und Endhaftung.

Für die erfindungsgemäßen Mischungen bevorzugte Hydroxylpolyurethane A sind weitgehend unvernetzte, d.h. lösliche und schmelzbare Polyisocyanat-Polyadditionsprodukte mit Hydroxylendgruppen. Geeignete Hydroxylpolyurethane A im Sinne der Erfindung sind Umsetzungsprodukte von Polyisocyanaten und Verbindungen mit gegenüber Isocyanaten reaktionsfähigen Wasserstoffatomen, wobei mindestens ein Teil dieser Verbindungen pro Molekül mindestens zwei Hydroxylgruppen besitzt. Andere Beispiele für gegenüber Isocyanaten reaktionsfähige Wasserstoffatome sind die Wasserstoffatome von Amino-, Thiol- und Carboxylgruppen.

Für die Herstellung der erfindungsgemäß zu verwendenden Hydroxylpolyurethane A geeignete Ausgangs-Polyisocyanate a) sind beliebige organische Verbindungen mit mindestens zwei Isocyanatgruppen pro Molekül, wie sie z.B. bei W. Siefken, Liebigs Annalen der Chemie 562, 75 - 136, beschrieben sind. Vorzugsweise werden Diisocyanate $X(NCO)_2$ eingesetzt, wobei X einen aliphatischen Kohlenwasserstoffrest mit 4 bis 12 Kohlenstoffatomen, einen cycloaliphatischen Kohlenwasserstoffrest mit 6 bis 15 Kohlenstoffatomen, einen aromatischen Kohlenwasserstoffrest mit 6 bis 15 Kohlenstoffatomen oder einen araliphatischen Kohlenwasserstoffrest mit 7 bis 15 Kohlenstoffatomen bedeutet. Beispiele derartiger bevorzugt einzusetzender Diisocyanate sind Tetramethylendiisocyanat, Hexamethylendiisocyanat, Dodecamethylendiisocyanat, 1,4-Diisocyanato-cyclohexan, 1-Isocyanato-3,3,5-trimethyl-5-isocyanato-methyl-cyclohexan (Isophorondiisocyanat), 4,4'-Diisocyanatodicyclohexylmethan, 4,4'-Diisocyanato-dicyclohexyl-propan-(2,2), 1,4-Diisocyanatobenzol, 2,4-Diisocyanatotoluol, 2,4-Diisocyanato-diphenylmethan, 2,6-Diisocyanatotoluol, 4,4'-Diisocyanato-diphenylmethan, p-Xylylen-diisocyanat sowie aus diesen Verbindungen bestehende Gemische.

Es ist selbstverständlich auch möglich, die in der Polyurethanchemie an sich bekannten höherfunktionellen Polyisocyanate oder auch an sich bekannte modifizierte, beispielsweise Carbodiimidgruppen, Allophanatgruppen, Isocyanuratgruppen, Urethangruppen und/oder Biuretgruppen aufweisende Polyisocyanate zu verwenden oder mitzuverwenden.

Bevorzugte Verbindungen mit gegenüber Isocyanaten reaktionsfähigen Wasserstoffatomen für die Herstellung der erfindungsgemäß zu verwendenden Hydroxylpolyurethane A sind b) organische Polyhydroxylverbindungen, insbesondere Polyesterpolyole, mit einem Molekulargewicht von 500 bis 6000.

Für die Herstellung der erfindungsgemäß zu verwendenden Hydroxylpolyester A bevorzugte Polyesterpolyole b) umfassen die Umsetzungsprodukte von mehrwertigen, vorzugsweise zweiwertigen und gegebenenfalls zusätzlich dreiwertigen Alkoholen mit mehrwertigen, vorzugsweise zweiwertigen, Carbonsäuren. Anstelle der Polycarbonsäuren können auch die entsprechenden Polycarbonsäureanhydride oder entsprechende Polycarbonsäureester von $C_1$-$C_4$-Alkoholen oder deren Gemische zur Herstellung der Polyester verwendet werden. Die Polycarbonsäuren können aliphatischer, cycloaliphatischer, aromatischer und/oder heterocyclischer Natur sein und gegebenenfalls, z.B. durch Halogenatome, substituiert und/oder ungesättigt sein. Sie umfassen vorzugsweise $C_4$-$C_{12}$ Polycarbonsäuren wie Bernsteinsäure, Adipinsäure, Isophthalsäure, Trimellitsäure, Phthalsäureanhydrid, Tetra- und Hexahydrophthalsäureanhydrid, Tetrachlorphthalsäureanhydrid, Endomethylentetrahydrophthalsäureanhydrid, Glutarsäureanhydrid, Fumarsäure, Maleinsäure und ihr Anhydrid.

Als mehrwertige Alkohole kommen z.B. Ethylenglykol, Propandiol-1,2 und -1,3, Butandiol-1,4, -1,3 und -2,3, Hexandiol-1,6, Octandiol-1,8, Neopentylglykol, 1,4-Bis-(hydroxymethyl)-cyclohexan, 2-Methyl-1,3-propandiol, Glycerin, Trimethylolpropan, Hexantriol-1,2,6, Butantriol-1,2,4, ferner Diethylenglykol, Triethylenglykol, Tetraethylenglykol, Polyethylenglykole, Dipropylenglykol, Polypropylenglykole, Dibutylenglykol und Polybutylenglykole in Frage.

Auch Hydroxylgruppen aufweisende Polycarbonate kommen als Bestandteil der Polyesterpolyol-Komponente b) in Betracht, z.B. solche, die durch Umsetzung von Diolen wie Propandiol-1,3, Butandiol-1,4 und/oder Hexandiol-1,6, Diethylenglykol, Triethylenglykol, Tetraethylenglykol mit Kohlensäurederivaten, z.B. Diphenylcarbonat oder Phosgen, hergestellt werden können.

Auch Hydroxylendgruppen aufweisende Polyester auf Basis von ω-Hydroxy-alkancarbonsäuren mit mindestens 5 C-Atomen, wie z.B. Polycaprolactone mit Hydroxylendgruppen, kommen als Polyesterpolyol-Komponente b) in Betracht. Sie können beispielsweise durch auf Diolen gestartete Polykondensation bzw. Polyaddition von ω-Hydroxycapronsäure oder Caprolacton hergestellt werden.

Für die Herstellung der erfindungsgemäß zu verwendenden Hydroxylpolyurethane A besonders bevorzugte Polyesterdiole b) sind beispielsweise in den DE-PS 12 56 822 und 19 30 336, der DE-AS 21 61 340 und der DE-OS 35 02 379 beschrieben. Dabei handelt es sich um Dihydroxypolyester mit einem Molekulargewicht von über 600 aus unverzweigten Alkandicarbonsäuren mit mindestens 6 C-Atomen pro Molekül wie Adipin-, Pimelin-, Kork-, Azelain-, Sebacinsäure und ihren Gemischen und aus unverzweigten Alkandiolen mit mindestens 4 C-Atomen pro Molekül wie Butandiol-1.4, Pentandiol-1.5, Hexandiol-1.6 und ihren Gemischen. Die Carbonsäurekomponente dieser Polyesterpolyole b) ist vorzugsweise eine Dicarbonsäurekomponente, die zu mindestens 50 Carboxyläquivalent-%, besonders bevorzugt ausschließlich, aus Adipinsäure besteht, während die entsprechende Polyolkomponente zu mindestens 50 Hydroxyläquivalent-%, besonders bevorzugt ausschließlich, aus Butandiol-1,4 und Hexandiol-1,6 besteht.

Die besonders bevorzugten Polyesterpolyole b) der oben beschriebenen Art sind kristallin. "Kristallin" Polyester in diesem Zusammenhang sind Polyhydroxy-, vorzugsweise Dihydroxypolyester mit aus der Hydroxylzahl berechneten Molekulargewichten von 600 bis 6000 und mit Schmelzbereichen im Bereich von 30 bis 75, vorzugsweise 40 bis 70° C, bestimmt durch Differential Scanning Calorimetry (DSC) mit einer Aufheizrate von 20° C/Minute an einer Probe, die vor der Messung auf eine Temperatur über den Schmelzpunkt erhitzt und anschließend mit einer Abkühlgeschwindigkeit von 20° C/Minute auf -100° C abgekühlt worden war.

Für die Herstellung der erfindungsgemäß zu verwendenden Hydroxylpolyurethane A geeignete Verbindungen mit gegenüber Isocyanaten reaktionsfähigen Wasserstoffatomen umfassen auch c) organische Polyhydroxylverbindungen und Aminoalkohole mit Molekulargewichten von 61 bis 499. Dazu zählen vorzugsweise 2- und/oder 3-wertige, insbesondere 2-wertige Polyhydroxylverbindungen und/oder Aminoalkohole des Molekulargewichtsbereichs 61 bis 499, vorzugsweise 61 bis 250.

Zu den Vertretern der Aufbaukomponenten c) gehören beispielsweise einfache, mehrwertige Alkohole wie Ethylenglykol, Propandiol-1,2, Propandiol-1,3, Butandiol-1,4, Hexandiol-1,6, Trimethylolpropan und Glycerin.

Auch niedermolekulare Polyesterdiole wie z.B. Adipinsäure-bis-(hydroxyethyl)-ester oder niedermolekulare, Ethergruppen aufweisende Diole wie z.B. Diethylenglykol, Triethylenglykol, propoxyliertes Bis(4-hydroxyphenyl)-propan-2,2, Di-, Tri- oder Tetrapropylenglykol können als Aufbaukomponente c) verwendet werden.

Zu den geeigneten Aminoalkoholen c) gehören beispielsweise Verbindungen wie Ethanolamin, Propanolamin, N-Methyl-diethanolamin, N-Ethyl-diisopropanolamin oder N,N'-Bis-(2-hydroxyethyl )-perhydropyrazin.

Für die Herstellung der erfindungsgemäß zu verwendenden Hydroxylpolyurethane A geeignete Verbindungen mit gegenüber Isocyanaten reaktionsfähigen Wasserstoffatomen umfassen auch d) einwertige Polyetheralkohole des Molekulargewichtsbereichs 800 bis 10000, vorzugsweise 1000 bis 5000, die durch Alkoxylierung von einwertigen Startermolekülen wie beispielsweise Methanol, Ethanol, n-Butanol oder Phenol erhältlich sind, wobei als Alkoxylierungsmittel Ethylenoxid oder Gemische von Ethylenoxid mit anderen Alkylenoxiden, wie insbesondere Propylenoxid, eingesetzt werden.

Im Falle der Verwendung von Mischetheralkoholen enthalten diese jedoch vorzugsweise mindestens 40, insbesondere mindestens 65 Mol-% an Ethylenoxidresten, bezogen auf Alkylenoxidreste. Die gegebenenfalls erfolgende Mitverwendung von derartigen Aufbaukomponenten d) bewirkt, daß in die Polyadditionsprodukte endständig hydrophile, innerhalb von Polyetherketten plazierte Ethylenoxid-Einheiten eingebaut werden.

Die Umsetzung der Polyisocyanate a) mit den Aufbaukomponenten b) und - soweit vorhanden - c) und d) erfolgt in der Regel vor der Zugabe der nachstehend beschriebenen Aufbaukomponente e) und ergibt ein im folgenden "NCO-Prepolymer" genanntes Reaktionsprodukt.

Für die Herstellung der erfindungsgemäß zu verwendenden Hydroxylpolyurethane A geeignete Verbindungen mit gegenüber Isocyanaten reaktionsfähigen Wasserstoffatomen umfassen auch e) Mono- und Diaminoverbindungen. Der Begriff "Diamino-Verbindung" bzw. "Diamine" soll auch Hydrazin und Hydrazinderivate umfassen. Es können Diaminoverbindungen, deren Molekulargewichtsbereich 32 bis 500, vorzugsweise 60 bis 300 beträgt, mit primären und/oder sekundären Aminogruppen eingesetzt werden.

Beispielsweise sind dies Ethylendiamin, Hexamethylendiamin, Isophorondiamin, 2,4-Diaminotoluol, 4,4'-Diaminodiphenylmethan, N,N'-Dimethylethylendiamin, Bis(4-aminocyclohexyl)-methan, Piperazin, 2,5-Dimethyl-piperazin, 1,4-Diaminocyclohexan, 1,2-Diamino-propan, Hydrazin-(hydrat), Diaminosulfonate der in der CA-PS 928 323 beschriebenen Art, oder das Natriumsalz der N-(2-Amino-ethyl)-2-aminopropionsäure.

Als Monoaminoverbindungen sind primäre und/oder sekundäre Aminoverbindungen einsetzbar, deren Molekulargewicht 17 bis 500, vorzugsweise 17 bis 300 beträgt. Beispielsweise sind dies Dibutylamin, N-Methylethanolamin, Diethanolamin, 3-Amino-1-propanol, 2-(3-Aminopropyl)-methylamino-ethanol, 2-Amino-1-hydroxymethyl-1,3-propandiol oder Methylamino- bzw. Aminoessigsäure und ihre Salze oder Ammoniak.

Besonders bevorzugt werden solche primären und/oder sekundären Aminoverbindungen eingesetzt die weitere, jedoch nicht aminische, gegenüber Isocyanaten reaktionsfähige Gruppen enthalten. Dies sind zum Beispiel Ethanolamin, Diethanolamin oder 2-Amino-2-hydroxymethyl-1,3-propandiol.

Die aminischen Aufbaukomponenten e) können auch in blockierter Form, d.h. in Form der entsprechenden Ketimine (DE-OS 2 725 589), Ketazine (DE-OS 2 811 148, US-PS 4 269 748) oder Aminsalze (US-PS 4 292 226) zum Einsatz gelangen.

Nach einer bevorzugten Ausführungsform werden die erfindungsgemäß zu verwendenden Hydroxylpolyurethane A aus

a) Polyisocyanaten,

b) organischen Polyhydroxylverbindungen des Molekulargewichtsbereiches 600 bis 6000, bevorzugt Polyesterpolyolen, gegebenenfalls

c) organischen Polyhydroxylverbindungen und/oder Aminoalkoholen des Molekulargewichtsbereichs 61 bis 499, gegebenenfalls

d) innerhalb von Polyetherketten eingebaute Ethylenoxideinheiten aufweisenden einwertigen Alkoholen des Molekulargewichtsbereichs 800 bis 10000 und gegebenenfalls

e) aminischen und/oder hydrazinischen Kettenverlängerungsmitteln

hergestellt.

Nach dieser bevorzugten Ausführungsform wird die Komponente c) in einer Menge von 0 bis 75 Hydroxyl- bzw. Aminäquivalent-%, bezogen auf die Summe der Komponenten b) und c), verwendet.

Komponente d) kann in solchen Mengen eingebaut werden, daß die erfindungsgemäß zu verwendenden Hydroxylpolyurethane A bis zu 25 Gew.-%, bezogen auf Hydroxylpolyurethan A, in Polyethergruppen vorliegende Alkylenoxideinheiten besitzen (vgl. US-PS 3 905 929 und 4 190 566).

Bevorzugte o,o,o',o',-Tetramethylbisphenol-Polycarbonate B sind Homopolycarbonate, Copolycarbonate und Mischungen dieser Polycarbonate, denen z.B. mindestens eines der folgenden Diphenole zugrundeliegt:

Bis-(3,5-dimethyl-4-hydroxyphenyl),
Bis-(3,5-dimethyl-4-hydroxyphenyl)-alkane,
" " " " -cycloalkane,
" " " " -sulfide,
" " " " -ether,
" " " " -ketone,
" " " " -sulfoxide,
α,α'-Bis-(3,5-dimethyl-4-hydroxyphenyl)-diisopropylbenzole

sowie deren kernhalogenierte Derivate, insbesondere
Bis-(3,5-dimethyl-4-hydroxyphenyl)-methan,
2,2-Bis-(3,5-dimethyl-4-hydroxyphenyl)-propan,
2,4-Bis-(3,5-dimethyl-4-hydroxyphenyl)-2-methylbutan,
1,1-Bis-(3,5-dimethyl-4-hydroxyphenyl)-cyclohexan,
α,α'-Bis-(3,5-dimethyl-4-hydroxyphenyl)-p-diisopropylbenzol,
Bis-(3,5-dimethyl-4-hydroxphenyl)-sulfon.

Besonders bevorzugte o.o.o'.o'-Tetramethylbisphenole entsprechen der Formel

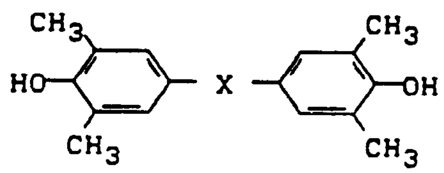

worin X für $C_1$-$C_5$-Alkylen oder -Alkyliden steht.

Die Tetramethylbisphenol-Polycarbonate B können bis zu 50, vorzugsweise bis zu 25, insbesondere 0 Mol-%, bezogen auf eingebaute Diphenoleinheiten, eingebaute Einheiten der folgenden Diphenole enthalten:
Hydrochinon,
Resorcin,
Dihydroxydiphenyle,
Bis-(hydroxyphenyl)-alkane,
Bis-(hydroxyphenyl)-cycloalkane,
Bis(hydroxyphenyl)-sulfide,
Bis-(hydroxyphenyl)-ether,
Bis-(hydroxyphenyl)-ketone,
Bis-(hydroxyphenyl)-sulfoxide,
Bis-(hydroxyphenyl)-sulfone,
α,α'-Bis-(hydroxyphenyl)-diisopropylbenzole
sowie deren kernalkylierte und kernhalogenierte Derivate. Diese und weitere geeignete Diphenole sind z.B. in den US-PS 3 028 365, 3 275 601, 3 148 172, 3 062 781, 2 991 273, 3 271 367, 2 999 835, 2 970 131 und 2 999 846, in den DE-OS 1-570 703, 2 063 050, 2 063 052, 2 211 956, 2 211 957, der FR-PS 1 561 518 und in der Monographie von H. Schnell, "Chemistry and Physics of Polycarbonates", Interscience Publishers, New York, 1964, beschrieben.

Als Cokomponenten bevorzugte Diphenole sind z.B.
4,4'-Dihydroxydiphenyl,
2,4-Bis-(4-hydroxyphenyl)-2-methylbutan,
α,α'-Bis-(4-hydroxyphenyl)-p-diisopropylbenzol,
2,2-Bis-(3-methyl-4-hydroxyphenyl)-propan und
2,2-Bis(3-chlor-4-hydroxyphenyl)-propan.

Als Cokomponenten besonders bevorzugte Diphenole sind z.B.
2,2-Bis-(4-hydroxyphenyl)-propan,
2,2-Bis(3,5-dichlor-4-hydroxyphenyl)-propan,
2,2-Bis(3,5-dibrom-4-hydroxyphenyl)-propan und
1,1-Bis-(4-hydroxyphenyl)-cyclohexan.

Mischungen und Cokondensate werden rechnerisch gleich behandelt, so daß ein Polycarbonat aus je 50 Gew.-% Bisphenol-A-Carbonat- und Tetramethylbisphenol-A-Carbonat-Einheiten wie eine Mischung aus je 50 Gew.-% Bisphenol-A-Polycarbonat und Tetramethylbisphenol-A-Polycarbonat betrachtet wird.

Die aromatischen Polycarbonate B können durch den Einbau von 0,05 bis 2,0 Mol-% (bezogen auf eingesetzte Diphenole) drei- oder mehr als dreifunktioneller Verbindungen, beispielsweise solcher mit drei oder mehr als drei phenolischen Hydroxygruppen, verzweigt sein.

Zur Einstellung des Molekulargewichts $\overline{M}_w$ der Polycarbonate B werden in bekannter Weise Kettenabbrecher, wie beispielsweise Phenol, Halogenphenole oder Alkylphenole, in den berechneten Mengen eingesetzt.

Die aromatischen Polycarbonate B haben ein mittleres Molekulargewicht $\overline{M}_w$ von 10 000 bis 200 000, vorzugsweise von 20 000 bis 80 000 haben, ermittelt durch Lichtstreuung.

Die erfindungsgemäß zu verwendenden Polycarbonate B sind beispielsweise in den DE-OS 15 70 703, 20 63 050, 22 11 956, 22 11 957 und 22 48 817 beschrieben.

Die erfindungsgemäßen Mischungen enthalten weiterhin gegebenenfalls

D1) ein- oder mehrwertiges Phenol, vorzugsweise mit einem $pK_A$-Wert von mindestens 7.4 und/oder

D2) Carbonsäure- und/oder Sulfonsäureamid.

Bevorzugte einwertige Phenole D1 entsprechen der Formel

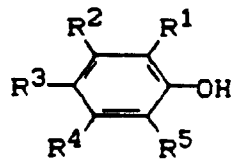

worin

$R^1$ - $R^5$ Wasserstoff, $C_1$-$C_{20}$-Alkyl, $C_5$-$C_8$-Cycloalkyl, $C_1$-$C_{18}$-Alkyl-substituiertes Phenylen, wobei die Alkylgruppen durch COO- oder O-Gruppen unterbrochen sein können,

bedeuten.

Besonders bevorzugte einwertige Phenole D1 umfassen beispielsweise n- und iso-Nonylphenole, p-tert.-Butylphenol, Hydrochinon, Resorcin, Brenzkatechin sowie deren kernalkylierte Derivate.

Besonders bevorzugte Phenole D1 sind mehrkernige Diphenole wie

- Dihydroxydiphenyle,
- Bis-(hydroxyphenyl)-alkane,
- Bis-(hydroxyphenyl)-cycloalkane,
- Bis-(hydroxyphenyl)-sulfide,
- Bis-(hydroxyphenyl)-ether,
- Bis-(hydroxyphenyl)-sulfoxide,
- Bis-(hydroxyphenyl)-sulfone und
- α,ω-Bis-(hydroxyphenyl)-diisopropylbenzole

sowie deren kernalkylierte und kernhalogenierte Derivate. Diese und weitere geeignete Diphenole sind z.B. in den US-S 32 71 367 und 29 99 846 und in den DE-OS 20 63 050 und 22 11 957 aufgeführt.

Besonders bevorzugte mehrkernige Diphenole D1 entsprechen der Formel

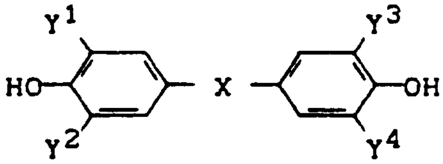

worin

X eine Einfachbindung oder $-CH_2-$,

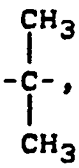,
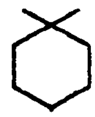,

-O-, -S-, $-SO_2-$, $-CO_2-$, -CO-,

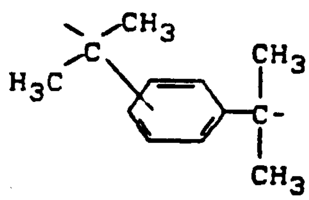

oder $-O-C_6-H_4-O-$,

$Y_1$ - $Y_4$ Wasserstoff, $C_1$-$C_4$-Alkyl, vorzugsweise Methyl, oder Halogen, vorzugsweise Chlor oder Brom, bedeuten.

Beispiele für besonders bevozugte mehrkernige Diphenole D1 sind
2,2-Bis-(4-hydroxyphenyl)-propan,
1,1-Bis-(4-hydroxyphenyl)-cyclohexan,
2,2-Bis-(3,5-dichlor-4-hydroxyphenyl)-propan,
2,2-Bis(3,5-dibrom-4-hydroxyphenyl)-propan,
2,2-Bis-(3,5-dimethyl-4-hydroxyphenyl)-propan,
Bis-(3,5-dimethyl-4-hydroxyphenyl)-methan und
Bis-(4-hydroxyphenyl)-sulfid.

Nach einer bevorzugten Ausführungsform werden Phenole D1 mit mehr als einer phenolischen Hydroxylgruppe nicht als solche, sondern in Form ihrer monomeren oder oligomeren Halbester eingesetzt. Geeignete Säurekomponenten für die Veresterungsreaktion sind Kohlensäurederivate, mehrwertige Carbonsäuren und Phosphorsäuren. Bevorzugte Verbindungen D1 dieser Art sind z.B. der Kohlensäureester des Bisphenols-A und dessen Oligomere mit einer endständigen phenolischen Hydroxylgruppe, Bisphenol-A-phosphorsäureester, oligomere Iso- und Terephthalsäure/Bisphenol-A-Ester mit einer endständigen phenolischen Hydroxylgruppe.

Bevorzugte Carbonsäure- und Sulfonsäureamide D2 umfassen Amide aliphatischer und aromatischer $C_7$ - $C_{24}$-Carbonsäuren und aliphatischer und aromatischer $C_6$-$C_{24}$-Sulfonsäuren wie z.B. Benzamid, N-Methylbenzamid, N,N-Dimethylbenzamid, Stearylamid, Toluolsulfonamid, N-Methylbenzolsulfonamid, N,N-Dimethylbenzolsulfonamid, Octadecylsulfonsäure-N,N-diethylamid.

Die erfindungsgemäßen Mischungen können bis zu 40, vorzugsweise 5 bis 20 Gewichtsteile D pro 100 Gewichtsteile (A+B) enthalten.

Die erfindungsgemäßen Mischungen können zwecks Verbesserung der Wärmefestigkeit der Verklebungen zusätzliche Polyisocyanate E, vorzugsweise Di-, Tri- und /oder Tetraisocyanate, enthalten. Aufgrund der Reaktionsfähigkeit dieser Verbindungen empfiehlt es sich, die Polyisocyanate erst kurz vor der Verarbeitung der erfindungsgemäßen Mischungen zuzusetzen. Geeignete Polyisocyanate E sind die oben aufgeführten Polyisocyanate a). Triphenylmethantriisocyanat und Thionophosphorsäure-tris-(p-isocyanatophenylester) sind besonders geeignet. Verwendbar sind aber auch beispielsweise die technisch leicht zugänglichen Polyisocyanate, z.B. das 2,4- und 2,6-Toluylendiisocyanat sowie beliebige Gemische dieser Isomeren ("TDI"), Polyphenylpolymethylen-polyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisenden Polyisocyanate ("modifizierte Polyisocyanate"), insbesondere solche modifizierten Polyisocyanate, die sich vom 2,4-und/oder 2,6-Toluylendiisocyanat bzw. vom 4,4'- und/oder 2,4'-Diphenylmethandiisocyanat ableiten.

Die erfindungsgemäßen Mischungen können bis zu 15, vorzugsweise 0,1 bis 10, Gewichtsteile Polyisocyanat E pro 100 Gewichtsteile (A+B) enthalten.

Die erfindungsgemäßen Mischungen können selbstverständlich auch Füllstoffe, Farbstoffe, Pigmente, Hilfsmittel und weitere Polymere, insbesondere Butadien/Styrol-Blockpolymerisate enthalten. Zum Erreichen spezieller Eigenschaften können den Mischungen auch natürliche oder synthetische Harze wie Phenolharze, Ketonharze, Kolophoniumderivate, Phthalatharze, Acetyl- oder Nitrocellulose zugesetzt werden.

Die erfindungsgemäßen Mischungen können sowohl unverdünnt als auch aus Lösung in einem organischen Lösungsmittel aufgetragen werden. Im ersten Fall ist eine Applikation aus der Schmelze, im zweiten Fall durch Aufbringen der Lösung und Verdunsten des Lösungsmittels möglich. Bevorzugte Lösungsmittel sind organische Flüssigkeiten mit einem Siedepunkt bis zu 150° C, vorzugsweise bis zu 120° C, wie z.B. aliphatische, cycloaliphatische und aromatische, gegebenenfalls chlorierte Kohlenwasserstoffe, Ketone, Alkohole, Ester und Mischungen davon. Bevorzugte organische Lösungsmittel umfassen beispielsweise Aceton, Butanon, Ethyl- und Butylacetat, Benzin, Methylenchlorid, Toluol und deren Mischungen.

Für den Fall B=O und D>O liegen als Kaltkleber geeignete Mischungen vor. Sie zeichnen sich insbesondere durch lange Kontaktklebezeit (z.B. bis zu 2 Stunden bei Raumtemperatur) aus.

Das aromatische Polycarbonat B ist sowohl mit dem Hydroxylpolyurethan A als auch mit der Polystyrolkomponente des Substrats verträglich und scheint mitverantwortlich für die Verankerung des Klebstoffs mit dem Substrat, z.B. Sohlenmaterial, zu sein. Beispielsweise kann aber auch durch einen 5 gew.-%igen Zusatz der Komponente D die Haftung des Klebstoffs auf Glas stark erhöht werden.

Die Komponente D bewirkt eine verbesserte Aktivierbarkeit der eingetrockneten Klebstoffschicht, die durch die Anwesenheit der Komponente B etwas vermindert wird.

Die Klebstoffbindemittel aus den beschriebenen Mischungen eignen sich zum Kleben von SBS-Blockpolymerisat-Compounds ohne Verwendung von Primern, darüber hinaus aber auch zum Kleben von vielen anderen Materialien, z.B. Gummi, Weich-PVC und anderen Kunststoffen, Leder, Metallen, Keramik, Glas und Holz.

Die in den nachfolgenden Beispielen genannten Teile sind Gewichtsteile; Prozentangaben beziehen sich auf das Gewicht.

## Beispiele

Eingesetzte Klebstoffkomponenten:

### PU 1:

Polyesterpolyurethan aus 1 Mol Poly-hexandiol-1,6-adipat vom Molekulargewicht 3.000, 0,4 Mol Butandiol-1,4 und 0,4 Mol Hexandiol-1,6 und 1,799 Mol Diphenylmethandiisocyanat (MDI) mit einer Lösungsviskosität (15 %ig in Methylethylketon) von 1-2 Pa.s.

### PU 2:

Polyesterpolyurethan aus 1 Mol Poly-hexandiol-1,6-adipat vom Molekulargewicht 2.250, 0,45 Mol Butandiol-1,4 und 0,45 Mol Hexandiol-1,6 und 1,899 Molen Diphenylmethandiisocyanat (MDI) mit einer Lösungsviskosität (15 %ig in Methylethylketon) von 1-2 Pa.s.

### PU 3:

Polyesterpolyurethan aus 1 Mol eines Poly-hexandiol-1,6-adipats vom Molekulargewicht 3.000, 0,55 Mol Butandiol-1,4 und 0,55 Mol Hexandiol-1,6 und 2,099 Molen Diphenylmethandiisocyanat (MDI) mit einer Lösungsviskosität (15 %ig in Methylethylketon) von 1-2 Pa.s.

### SB 1:

SB-Blockpolymerisat mit 20 % Butadien, 80 % Styrol, Blockstyrolgehalt 74,8 %, Jodzahl 96, Lösungsviskosität (5 g/l in Toluol bei 25° C): 75,2 ($cm^3/g$).

SB 2:

Styrol/Butadien-Blockpolymerisat vom Typ SBS, Butadiengehalt 64 %, Intrinsic-Viskosität 79 ($cm^3/g$ in $CH_2Cl_2$) (Cariflex 1102®, Handelsprodukt der Shell AG).

MPC:

Ein aus Tetramethylbisphenol A = 2,2-Bis(3,5-dimethyl-4-hydroxyphenyl)propan und Phosgen hergestelltes Polycarbonat mit einer Viskosität $\eta_{rel.}$ von 1.30 (0,5 g Polycarbonat in 100 ml $CH_2Cl_2$). Dieser Wert entspricht einem mittleren Polymerisationsgrad $\overline{P}$ von 60.

Polyisocyanat E:

Thionophosphorsäure-tris-(p-isocyanatophenylester), Lösung in Methylenchlorid, NCO-Gehalt 5,4 ± 0,2 %.

Ausführung der Verklebungen

Unter Verwendung der nachstehend beschriebenen 20 %igen Klebstofflösungen wurden Verklebungen von Weich-PVC (45 % Dioctylphthalat) mit einem gefüllten Sohlenmaterial auf Basis von Styrol/Butadien-Blockpolymerisat ausgeführt. Nach dem Auftragen auf Streifen von 15 x 3 cm ließ man beide Seiten 30 Minuten ablüften und unterzog dann die Probe mit dem thermoplastischen Kautschuk 6 Sekunden einer Schockaktivierung mit Hilfe eines IR-Strahlers (Funk-Aktiviergerät Typ A 1000).

1. Schälfestigkeit

Sofort danach wurden die Prüfkörper aufeinandergelegt und innerhalb von 10 Sekunden in einer Presse bei Raumtemperatur unter einem Druck von 0,4 MPa 10 Sekunden lang verpreßt.

Sofort danach (innerhalb von 30 Sekunden) wurde die erste Prüfung auf Schälfestigkeit in einer Zerreißmaschine ausgeführt (Sofortwert, Abzugsgeschwindigkeit 100 mm/min). Eine weitere Prüfung erfolgte nach 1 Tag, eine weitere nach 9 Tagen. Eine Variante bestand darin, daß unmittelbar vor dem Klebstoffauftrag der Lösung 5 phr Polyisocyanat E zugefügt wurden. Die Ergebnisse sind jeweils gekennzeichnet durch "ohne" bzw. "mit Isocyanat".

2. Bestimmung der Kontaktklebzeit nach der Wärmeschockaktivierung bei 70° C (KKZ 70)

Als Material wurd ein handelsübliches, 4 mm dickes Gummimaterial aus Acrylnitril/Butadien-Kautschuk (Acrylnitrilgehalt 33 %, Defo-Härte 700 nach DIN 53 514) mit einem Gehalt an Silikat-Füllstoff von etwa 31 % (Shore-Härte A des Gummimaterials 85 nach DIN 53 505) verwendet.

Zur Prüfung wurden Streifen in 4 cm Länge und 2 cm Breite eingesetzt. Die einem Sohlenmaterial entsprechenden Streifen wurden nach dem Klebstoffauftrag einen Tag bei Raumtemperatur offen gelagert und dann 3 Sekunden im Funck-Aktiviergerät Typ A 1000 (70° C) aktiviert.

Die dem Obermaterial entsprechenden, mit Klebstoff versehenen Streifen wurden nicht aktiviert, sondern lediglich 30 Minuten bei Raumtemperatur offen gelagert und dann mit einem Streifen, der einen aktivierten Klebfilm trug, sofort nach dessen Aktivierung kreuzförmig übereinandergelegt und 5 Sekunden mit einem Gewicht von 10 N belastet. Nach dem Pressen wurde durch Auseinanderziehen der Streifen von Hand die Haftung der Klebfilme beurteilt. Die Prüfung wurde in Abständen von je 30 Sekunden nach Aktivierung wiederholt (bis zu 10 Minuten). Die Bestimmung der KKZ 70 wurde abgebrochen, sobald die Klebfilme keinen Kontakt mehr aufwiesen.

3. Bestimmung der Mindestaktivierungstemperatur (MAT)

Man verfuhr wie unter 2., jedoch mit einer Aktivierungstemperatur von 35° C. 30 Minuten nach der Aktivierung wurde der Streifen sofort mit dem 30 Minuten alten, nicht aktivierten Streifen kreuzförmig übereinandergelegt und 5 Sekunden mit einem Gewicht von 10 N belastet.

Nach dem Pressen wurde durch hbziehen der Streifen von Hand die Haftung der Klebfilme beurteilt.

Es wurde die Mindestaktiviertemperatur ermittelt, bei der die Klebefilme sofort nach dem Aktivieren einen Kontakt aufwiesen.

4. Ermittlung der Wärmefestigkeit (WF)

Zwei Streifen PVC, 6 cm lang und 2,5 cm breit, des gleichen Materials wie bei der Ermittlung der Anfangsfestigkeit, wurden nach Rauhung mit Schleifband der Körnung 40 mit Klebstoff versehen, 60 Minuten offen bei Raumtemperatur gelagert, dann mit einer Überlappung von 25 mm gefügt und 10 Sekunden bei 3,5 kp/cm$^2$ gepreßt. Die Klebefläche betrug 2,5 x 2,5 cm. Nach 10 Tagen Lagerung bei Raumtemperatur wurden die Klebungen in einem auf 40° C vorgeheizten automatischen Wärmeschrank mit einer Belastung von 11,2 kp eingehängt. Nach 20 Minuten wurde die Temperatur jeweils innerhalb von 20 Minuten um 10° C gesteigert. Es wurde die Temperatur ermittelt, bei der die Trennung der Verklebung erfolgt (WF o/m = Werte ohne/mit Isocyanatzusatz).

5. Kontaktklebzeit bei Raumtemperatur (KKZ-RT)

Auf holzfreiem Karton wurde der Klebstoff mit 0,3 mm Dicke aufgetragen. In Abständen von 15 Minuten wurden dann 5 mm breite Prüfstreifen kreuzförmig übereinandergelegt und 10 Sekunden mit 50 g gepreßt. Die Bestimmung der Kontaktklebzeit war beendet, wenn die Klebfilme nicht mehr aneinander hafteten.

Beispiel 1

Es wurden Klebstoffmischungen nach Tabelle 1A hergestellt und die Lösungen zur Verklebung von thermoplastischem Kautschuk (Sohlenmischung mit 56 % SBS-Blockpolymerisat, 36 % Öl, 8 % Füllstoff, Abkürzung IB 1) gegen Weich-PVC (45 % Weichmacher) verwendet.

Tabelle 1A Klebstoffmischungen

| Beispiel | Modifikator MPC (Gew.-%) | Hydroxylpolyurethan PU 1 (Gew.-%) | Lösungsmittel (Gew.-%)[1)] |
|---|---|---|---|
| 1 A | 2 | 18 | 80 |
| 1 B | 0,2 | 19,8 | 80 |
| Vergleich | 0 | 20 | 80 |

1) Aceton/Ethylacetat = 3:1 Gewichtsteile

Tabelle 1B Ergebnisse der Klebstoffprüfung

| Klebstoff | Schälfestigkeit (N/mm) ohne Isocyanat sofort | 1 Tag | 9 Tage | WFo |
|---|---|---|---|---|
| 1 A | 2,7 | 5,7 E[1)] | - | 60° C |
| 1 B | 1,2 | 3,3 | 5,3 | 62° C |
| Vergleich | 0,2 | 0,3 | 0,3 | 58° C |

1) Probe eingerissen

Beispiel 2

Die Mischungen dieses Beispiels zeigen die Wirkung der Zusätze von Bisphenol-A bzw. N,N-Diethyl-p-toluolsulfonamid. Tabelle 2A gibt die Rezeptur der Klebstofflösungen an. Es wurden Verklebungen von thermoplastischen Kautschuken, nämlich

1) Typ IB 1 aus Beispiel 1 und

2) Type IB 2 (59 % SBS-Polymerisate, 35 % Weichmacheröl, 6 % Kreide),

mit weighgemachtem PVC (45 % Weichmacher) untersucht. Die Ergebnisse sind in Tabelle 2B zusammengestellt.

Tabelle 2 A Klebstoffmischungen

| Klebstoff | Modifikator MPC | BPA[1)] | p-TSA[2)] | Hydroxyl-poly-urethan PU 1 | Lösungsmittel[3)] |
|---|---|---|---|---|---|
| 3A | 5 | 5 | - | 90 | 400 |
| 3B | 5 | 2,5 | - | 92,5 | |
| 3C | 10 | 10 | - | 80 | 400 |
| 3D | 10 | 5 | - | 85 | 400 |
| 3E | 5 | 5 | 5 | 85 | 400 |

1) Bisphenol-A
2) N,N-Diethyl-p-tolulsulfonamid
3) Aceton/Ethylacetat = 3:1 Gewichtsteile

Tabelle 2 B Ergebnisse der Klebstoffprüfung

| Kleb-stoff | Sohlen-material | Schälfestigkeit mit Isocyanat | | | WFm |
|---|---|---|---|---|---|
| | | n.15 Min | 1 Tag | 9 Tage | |
| 3A | IB 1 | 2,4 | 6,0 E[1)] | - | 96° C |
| | IB 2 | 2,6 | 4,8 | 5,0 | |
| 3B | IB 1 | 1,2 | 3,5 | 5,0 E | 102° C |
| | IB 2 | 1,0 | 2,2 | 4,5 | |
| 3C | IB 1 | 2,0 | 3,0 | 5,0 E | 94° C |
| | IB 2 | 1,2 | 2,5 | 4,8 | |
| 3D | IB 1 | 1,8 | 3,2 | 5,0 | 94° C |
| 3E | IB 1 | 1,5 | 2,9 | 5,2 | 94° C |
| | IB 2 | 1,3 | 2,9 | 5,0 | |

## Patentansprüche

1. Verwendung der Mischungen aus
   A) 85 - 99,5 Gew.-Teilen Hydroxylpolyurethan und
   B) 15 - 0,5 Gew.-Teilen aromatischem Polycarbonat mit einem mittleren Molekulargewicht $M_w$ von 10.000 - 200.000, dessen eingebaute Diphenoleinheiten zu mindestens 50 Mol-% aus o.o.o'.o'-Tetramethylbisphenol-Einheiten bestehen, als Klebstoffbindemittel zur Verklebung von SBS-Blockpolymerisaten.

2. Verwendung der Mischungen nach Anspruch 1, worin die Diphenoleinheiten des Polycarbonats B zu mindestens 75 Mol-% aus o.o.o'.o'-Tetramethylbisphenol-Einheiten bestehen.

3. Verwendung der Mischungen nach Ansprüchen 1 und 2, worin die Diphenol-Einheiten des Polycarbonats B zu 100 Mol-% aus o.o.o'.o'-Tetramethylbisphenol-Einheiten bestehen.

4. Verwendung der Mischungen nach Ansprüchen 1 - 3, worin 5 bis 20 Gewichtsteile Phenole D1 und/oder Amide D2 pro 100 Gewichtsteile (A+B) enthalten sind.

5. Verwendung der Mischungen nach Ansprüchen 1 - 4, worin 0,1 bis 10 Gewichtsteile Polyisocyanat E pro 100 Gewichtsteile (A+B) enthalten sind.

## Claims

1. The use of mixtures of
   A) 85 to 99.5 parts by weight hydroxylpolyurethane and
   B) 15 to 0.5 parts by weight aromatic polycarbonate having an average molecular weight $M_w$ of 10,000 to 200,000 in which at least 50 mol-% of the incorporated diphenol units consist of o,o,o',o'-tetramethylbisphenol units,
   as adhesive binders for bonding SBS block polymers.

2. The use of the mixtures as claimed in claim 1, in which at least 75 mol-% of the diphenol units of polycarbonate B consist of o,o,o',o'-tetramethylbisphenol units.

3. The use of the mixtures as claimed in claims 1 and 2, in which 100 mol-% of the diphenol units of polycarbonate B consist of o,o,o',o'-tetramethylbisphenol units.

4. The use of the mixtures as claimed in claims 1 to 3, in which 5 to 20 parts by weight phenols D1 and/or amides D2 are present per 100 parts by weight (A+B).

5. The use of the mixtures as claimed in claims 1 to 4, in which 0.1 to 10 parts by weight polyisocyanate E are present per 100 parts by weight (A+B).

## Revendications

1. 1. Utilisation de mélanges de :
   A) 85 à 99,5 parties en poids d'un polyuréthanne hydroxylé, et
   B) 15 à 0,5 parties en poids d'un polycarbonate aromatique, poids moléculaire moyen $M_w$ de 10 000 à 200 000, dont les motifs de diphénols chimiquement combinés consistent pour au moins 50 moles % en motifs d'o,o,o',o'-tétraméthylbisphénol, en tant que liants pour colles prévues pour le collage de polymères séquencés SBS,

2. Utilisation des mélanges selon la revendication 1, dans lesquels les motifs de diphénols du polycarbonate B consistent pour au moins 75 moles % en motifs d'o,o,o',o'-tétraméthylbisphénol.

3. Utilisation des mélanges selon les revendications 1 et 2, dans lesquels les motifs de diphénols du polycarbonate B consistent pour 100 moles % en motifs d'o,o,o',o'-tétraméthylbisphénol.

4. Utilisation des mélanges selon les revendications 1 à 3, dans lesquels il y a 5 à 20 parties en poids des phénols D1 et/ou des amides D2 pour 100 parties en poids de (A + B).

5. Utilisation des mélanges selon les revendications 1 à 4, dans lesquels il y a 0,1 à 10 parties en poids du polyisocyanate E pour 100 parties en poids de (A + B).